# EUROPEAN PATENT APPLICATION

(11) **EP 1 357 068 A1**
(43) Date of publication of application: **29.10.2003**
(21) Application number: 00981697.6
(22) Date of filing: 13.12.2000
(51) Int. Cl.: B65G 67/04, E01F 13/00, B60P 3/00

(54) **ROAD REGULATION MEMBER RECOVERING DEVICE**

(71) Applicant: Sendai Engi Co. Ltd., Sendai-shi, Miyagi 980-0811 (JP)
(72) Inventor: SHIMOMATA, Nobolu, Sendai Engi Co. Ltd, Sendai-shi, Miyagi 980-0811 (JP)
(74) Representative: Beresford, Keith Denis Lewis
(86) International application number: JP0008832
(87) International publication number: WO02048010

(57) **Abstract**

[OBJECT] It is an object of the invention to provide a road control member retrieving apparatus which is less dangerous for an operator and has a simple structure.

[STRUCTURE] A road control member retrieving apparatus for retrieving a hollow conical road control member 400 disposed on a ground including a retrieving portion 100 mounted to a truck 300 as a transfer car and a toppling portion 200 mounted closer to a rear end of the truck 300 than the retrieving portion 100 to topple the road control member 400 over by backward traveling of the truck 300, wherein the retrieving portion 100 includes a retrieving lug 120 to be fitted in the road control member 400 which has been toppled over by the toppling portion 200, a rotating arm 110 to which the retrieving lug 120 is mounted, and a driving portion 130 for rotating the rotating arm 110, the rotating arm 110 is rotated, and the road control member 400 is moved to a retrieving position of the road control member 400 on an upper side of the rear body 310 of the truck 300 in a state in which the retrieving lug 120 is fitted in the toppled-over road control member 400.

## Description

### [TECHNICAL FIELD]

The present invention relates to a road control member retrieving apparatus for retrieving hollow conical road control members arranged on a road in traffic control associated with road construction and the like.

### [BACKGROUND TECHNIQUE]

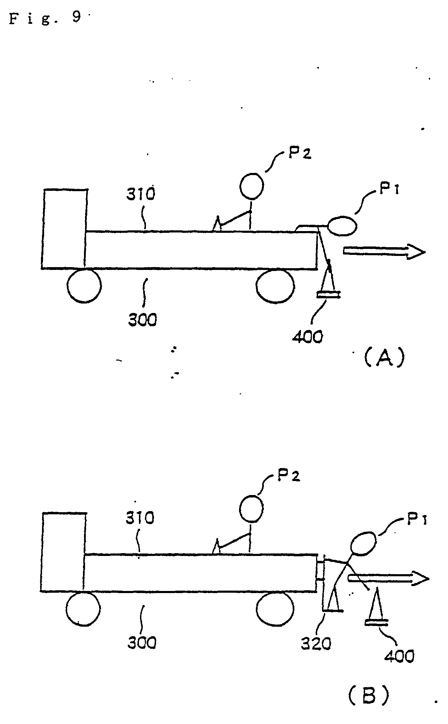

Road control members 400 of this type are arranged at constant intervals at a road construction site so as to separate a construction area and a traffic area from each other. Retrieval of the road control members 400 is carried out from an end of the traffic control. Specifically, as shown in FIG. 9(A), one of two operators P1 on a rear body 310 of a truck 300 leans out of the rear body 310 to lift the road control member 400 with his/her hand and hands the member 400 to the other operator P2. In another case, as shown in FIG. 9(B), a step 320 is provided to a rear end portion of the rear body 310 of the truck 300, one operator P1 is on the step 320 while supporting himself/herself with his/her hand, the other operator P2 is on the rear body 310, and the operator P1 on the step 320 lifts the road control member 400 and hands the member 400 to the operator P2 on the rear body 310.

There are also road control member retrieving apparatuses as disclosed in Japanese Unexamined Patent Publication No. Hei 3-257208, Japanese Unexamined Patent Publication No. Hei 7-331627, and Japanese Unexamined Patent Publication No. Hei 8-92921.

However, retrieval of the road control member while one of the two operators leans out involves considerable dangers.

Although the apparatuses disclosed in the above referred Japanese Patent Publications does not involve such a danger, the apparatuses have a large-scaled and complicated structure such as a belt conveyor. Therefore, there are problems of a high price and frequent failures.

The present invention has been accomplished with the above circumstances in view and it is an object of the invention to provide a road control member retrieving apparatus which is less dangerous to an operator and which has a simple structure.

### [DISCLOSURE OF THE INVENTION]

A road control member retrieving apparatus according to the present invention is a road control member retrieving apparatus for retrieving a hollow conical road control member disposed on a ground comprising a retrieving portion mounted to a transfer car and a toppling portion mounted forward of the retrieving portion in a traveling direction of the transfer car to topple the road control member over by traveling of the transfer car, wherein the retrieving portion includes a retrieving lug to be fitted in the road control member which has been toppled over by the toppling portion, a rotating arm to which the retrieving lug is mounted, and a driving portion for rotating the rotating arm, the rotating arm is rotated, the retrieving lug is fitted in the toppled-over road control member, and the road control member is moved to a retrieving position of the road control member on an upper side of the transfer car.

### [BRIEF DESCRIPTION OF THE DRAWINGS]

FIG. 1 is a schematic perspective view of a structure of a retrieving portion of a road control member retrieving apparatus according to a first embodiment of the present invention.
FIGS. 2(A) to 2(D) are explanatory views of a retrieving procedure of road control members by the road control member retrieving apparatus according to the first embodiment of the invention.
FIGS. 3(A) and 3(B) are explanatory views of the retrieving procedure of the road control members by the road control member retrieving apparatus according to the first embodiment of the invention.
FIG. 4 is a schematic plan view of a toppling portion of a road control member retrieving apparatus according to a second embodiment of the invention.
FIG. 5 is a schematic explanatory view of an essential portion of a road control member retrieving apparatus according to a third embodiment of the invention.
FIGS. 6(A) and 6(B) are drawings showing the essential portion of the road control member retrieving apparatus according to the third embodiment of the invention, wherein FIG. 6(A) is a schematic back view and FIG. 6(B) is an explanatory view.
FIGS. 7 (A) and 7 (B) are drawings of a road control member retrieved by the road control member retrieving apparatus according to the embodiments of the invention, wherein FIG. 7 (A) is a schematic perspective view and FIG. 7(B) is a schematic sectional view.
FIGS. 8(A) and 8(B) are explanatory views of a rotating arm and rotating lugs of a road control member retrieving apparatus according to another embodiment of the invention.
FIGS. 9(A) and 9(B) are explanatory views of prior-art methods for retrieving the road control member.

### [EXPLANATION OF REFERENCE NUMERALS]

- 100: retrieving portion
- 110: rotating arm
- 120: retrieving lug
- 130: driving portion
- 200: toppling portion
- 300: truck (transfer car)
- 310: rear body
- 400: road control member

### [BEST MODES FOR CARRYING OUT THE INVENTION]

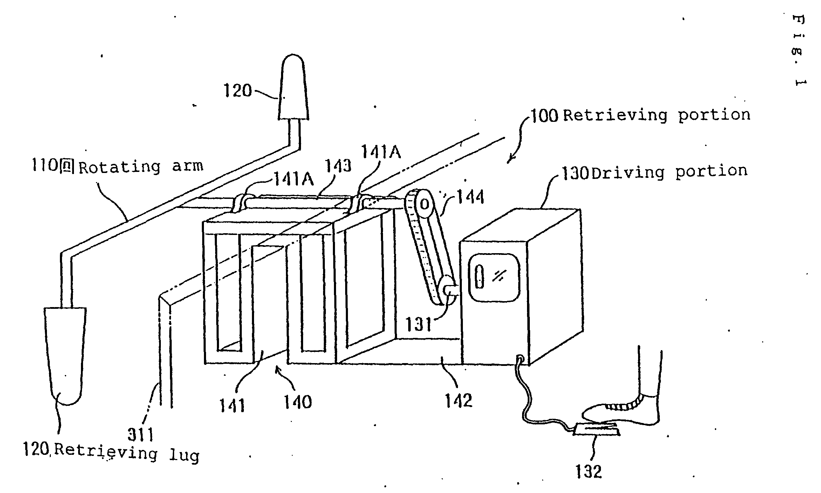

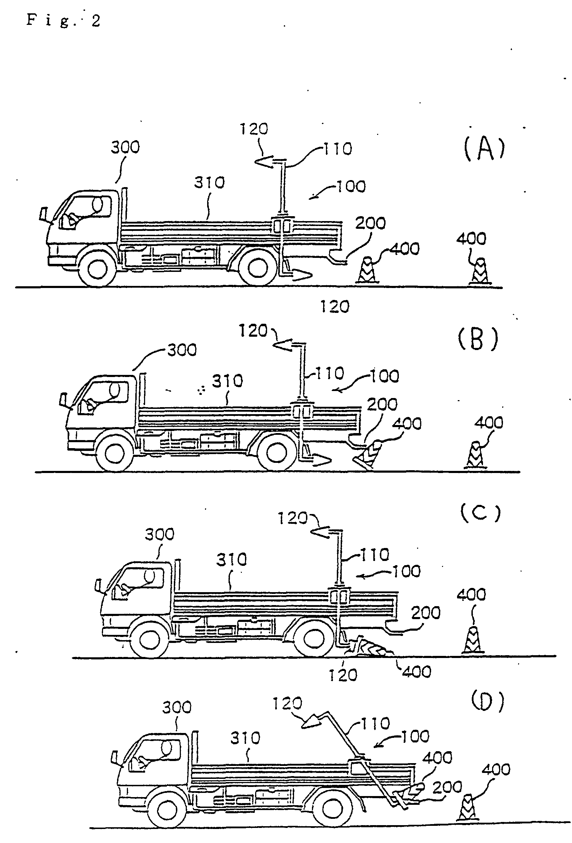

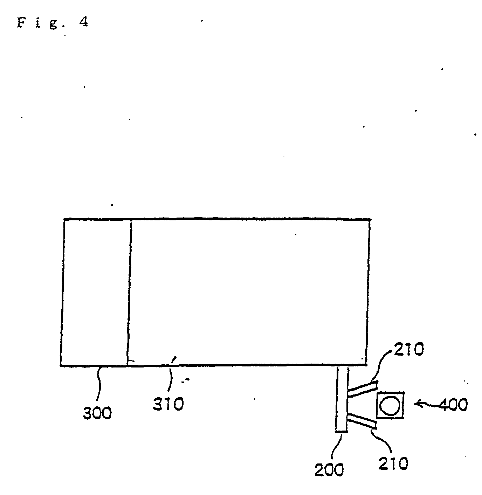

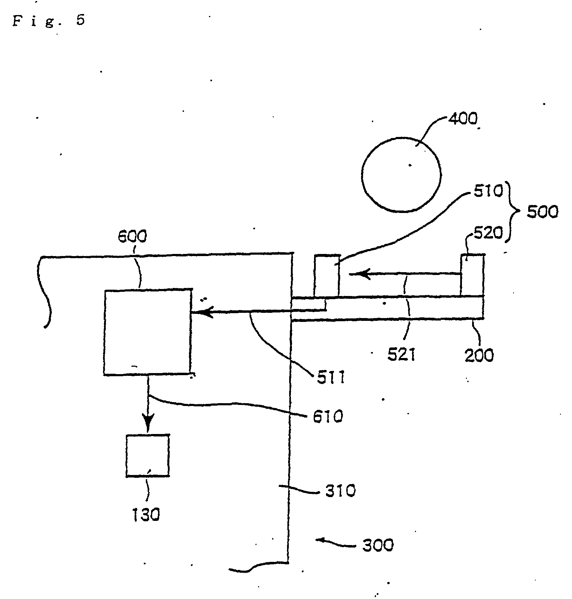

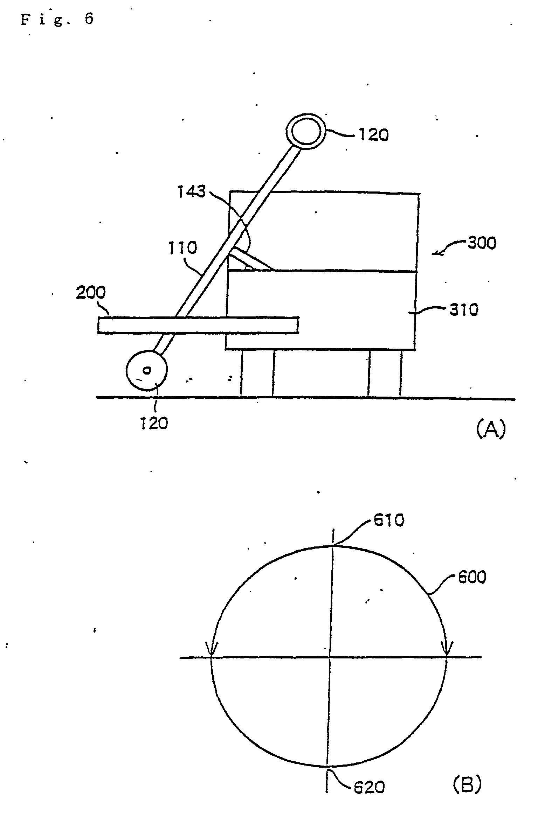

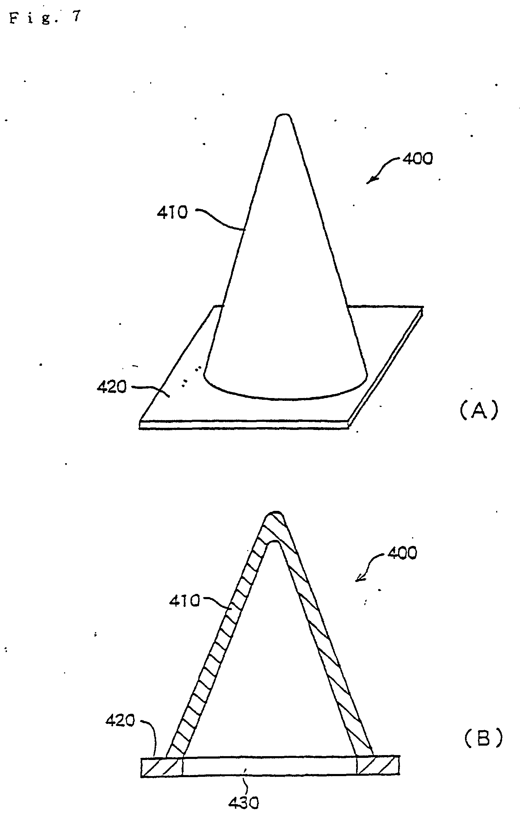

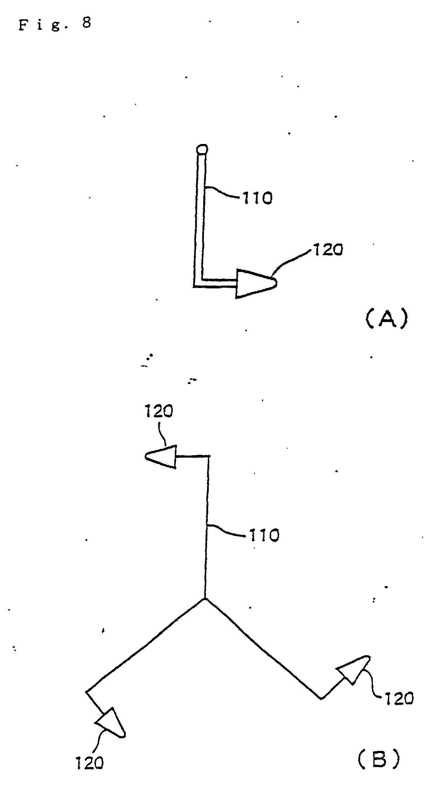

FIG. 1 is a schematic perspective view of a structure of a retrieving portion of a road control member retrieving apparatus according to a first embodiment of the present invention. FIGS. 2(A) to 3(B) are explanatory views of a retrieving procedure of road control members by the road control member retrieving apparatus according to the first embodiment of the invention. FIG. 4 is a schematic plan view of a toppling portion of a road control member retrieving apparatus according to a second embodiment of the invention. FIG. 5 is a schematic explanatory view of an essential portion of a road control member retrieving apparatus according to a third embodiment of the invention. FIGS. 6(A) and 6(B) are drawings showing the essential portion of the road control member retrieving apparatus according to the third embodiment of the invention, wherein FIG. 6(A) is a schematic back view and FIG. 6(B) is an explanatory view. FIGS. 7(A) and 7(B) are drawings of a road control member retrieved by the road control member retrieving apparatus according to the embodiments of the invention, wherein FIG. 7(A) is a schematic perspective view and FIG. 7 (B) is a schematic sectional view. FIGS. 8(A) and 8(B) are explanatory views of a rotating arm and rotating lugs of a road control member retrieving apparatus according to another embodiment of the invention. In FIGS. 1 and 8, the operator is not shown for convenience in creating the drawings.

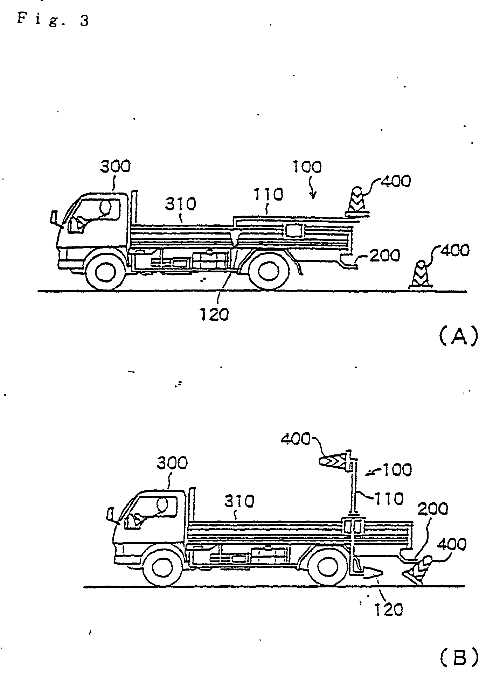

The road control member retrieving apparatus according to the first embodiment of the present invention is the road control member retrieving apparatus for retrieving a hollow conical road control member 400 placed on a ground and includes a retrieving portion 100 mounted to a truck 300 as a transfer car and a toppling portion 200 mounted closer to a rear end of the truck 300 than the retrieving portion 100 to topple the road control member 400 over by backward traveling of truck 300. The retrieving portion 100 has retrieving lugs 120 to be fitted in the road control member 400 which has been toppled: over by the toppling portion 200, a rotating arm 110 to which the retrieving lugs 120 are mounted, and a driving portion 130 for rotating the rotating arm 110. The rotating arm 110 is rotated to move the road control member 400 to a retrieving position (a position where an upper road control member 400 exists in FIG. 3(B)) of the road retrieving member on an upper side of a rear body 310 in a state in which the retrieving lug 120 is fitted in the toppled-over road control member 400.

Before describing the road control member retrieving apparatus, the road control member 400 to be retrieved by the road control member retrieving apparatus will be first described by reference to FIG. 7. The road control member 400 has a hollow conical main body portion 410 and a seat portion 420 provided toward a peripheral outside of an opening end 430 of the main body portion 410. Therefore, in a lower face of the load control member 400, the opening end 430 of the main body portion 410 opens. The seat portion 420 is formed into a square shape in a plan view.

The road control member 400 is placed such that a side of the seat portion 420 is parallel to a traveling direction of a road under the guidance given to a construction contractor if the road control member 400 is placed at a road construction site or the like.

The retrieving portion 100 and the toppling portion 200 constituting the road control member retrieving apparatus can be detachably mounted to the rear body 310 of the truck 300 as the transfer car. Therefore, the retrieving portion 100 and the toppling portion 200 can be mounted to both the right and left sides of the rear body 310 of the truck 300.

The toppling portion 200 is a stick body projecting sideways from the truck 300 and mounted to a proper position such as a bumper of a rear end of the truck 300. A tip end of such the toppling potion 200 is provided with a stick-shaped stopper projecting in a direction of backward traveling of the truck 300. The stopper is for preventing the road restricting member 400 from being toppled over outside the toppling portion 200.

The retrieving portion 100 has a fixing frame 140 for fixing the retrieving portion 100 to the rear body 310 of the truck 300 besides the rotating arm 110, the two retrieving lugs 120, and the driving portion 130. The fixing frame 140 has, as shown in FIG. 1, a fixing portion 141 in which a side wall 311 of the rear body 310 of the truck 300 is pinched and which is substantially in an inverted angular U shape, a driving portion installing portion 142 provided to extend outward from the fixing portion 141, a rod-shaped connecting member 143 having the rotating arm 110 on the edge thereof and rotatably supported by two bearing portions 141A provided to an upper face of the fixing portion 141, and a connecting belt 144 for connecting the connecting member 143 and an output shaft 131 of the driving portion 130 installed in the driving portion installing portion 142.

On the other hand, a center of the rotating arm 110 constituting the retrieving portion 100 is a center of rotation and one retrieving lug 120 bending at a substantially right angle is provided to each end of the rotating arm 110. The retrieving lug 120 is positioned on a forward side in a rotating direction when the rotating arm 110 rotates in retrieving the road control member 400. The retrieving lug 120 is formed into a conical shape which is a size smaller than the road control member 400 such that the retrieving lug 120 is fitted in the road control member 400 to be retrieved.

The driving portion 130 is a motor turned on and off by using a foot switch 132 placed on the rear body 310. The output shaft 131 is connected to the center of the rotating arm 110 through the belt 144 and the connecting member 143. The driving portion 130 rotates the rotating arm 110 through 180° when the foot switch 132 is turned on.

The rotating arm 110 and the driving portion 130 of the retrieving portion 100 are mounted to the rear body 310 of the truck 300 such that the rotating arm 110 is positioned outside the rear body 310 and that the driving portion 130 is positioned inside the rear body 310. Therefore, the driving portion 130 can be operated by an operator on the rear body 310.

Next, a retrieving procedure of the road control member 400 by the road control member retrieving apparatus with the above structure will be described by reference to FIGS. 2(A) to 3(B).

First, the truck 300 travels backward to topple the road control member 400 over with the toppling portion 200 (see FIGS. 2(A) and 2(B)). Then, the road control member 400 is toppled over with the opening end 430 at the bottom facing the truck 300.

The operator rotates the rotating arm 110 by using the foot switch 132 from a state in which one retrieving lug 120 is positioned in a lower standby position (a position of a retrieving lug 120 on a lower side of FIG. 2(A)) and the other retrieving lug 120 is positioned in the upper retrieving position, i.e., a state in which the rotating arm 110 is standing upright. As a result, the one retrieving lug 120 positioned on the lower side is fitted in the main body portion 410 through the opening end 430 of the road control member 400 (see FIG. 2(C)).

If the rotating arm 110 continues to rotate (see FIG. 2(D)), the rotating lug 120 which has retrieved the road control member 400 comes rotating above the rear body 310 of the truck 300 (FIGS. 3(A) and 3(B)). At this time, the operator on the rear body 310 holds the road control member 400 with his/her hands and recovers the member 400 onto the rear body 310.

At this time, the next road control member 400 is toppled over by the toppling portion 200 (see FIG. 3(B)) and retrieved by the other retrieving lug 120.

By repeating the above operation, it is possible to retrieve the large number of road control members 400 quickly and safely.

Next, a road control member retrieving apparatus according to a second embodiment of the invention will be described by reference to FIG. 4.

This road control member retrieving apparatus is different from one according to the above-described first embodiment in the toppling portion 200. In other words, the toppling portion 200 in this road control member retrieving apparatus is provided with a toppling guide portion 210 for toppling the road control member 400 over within such a range that the retrieving lug 120 is fitted in the road control member 400.

This is because the road control member 400 may be displaced and toppled over such that the retrieving lug 120 cannot be fitted in the opening end 430 of the main body portion 410 without the toppling guide portion 210 when the road control member 400 is not in a proper position, i.e., a side of the seat portion 420 is diagonal to the traveling direction of the road.

The toppling guide portion 210 is a pair of plates which opens in a traveling direction (backward traveling) of the truck 300 in a substantially V shape in a plan view as shown in FIG. 4. With such a toppling guide portion 210, even if the road control member 400 is toppled over in a diagonal direction because of an error in eye measurement of a driver of the truck 300 or in guidance of the operator on the rear body 310, the road control member 400 can be toppled over with the toppling guide portion 210 within such a range that the retrieving lug 120 is fitted. As a result, more reliable retrieval of the road control member 400 is possible. The toppling guide portion 210 can be also considered to be the stopper with an improved function.

Next, a road control member retrieving apparatus according to the third embodiment of the invention will be described by reference to FIG. 5.

This road control member retrieving apparatus according to the third embodiment is different from the above-described two road control member retrieving apparatuses in that the driving portion 130 which is turned on and off by the operator in the above two apparatuses is turned on and off automatically.

The road control member retrieving apparatus according to the third embodiment has a detecting portion 500 for detecting the road control member 400 which has been toppled over by the toppling portion 200 and a control portion 600 for controlling the driving portion 130 such that the retrieving lug 120 is fitted in the toppled-over road control member 400 according to a detection result of the detecting portion 500.

The detecting portion 500 is formed of a light-emitting element 520 for emitting an infrared ray 521, for example, and a light-receptive element 510 for receiving the infrared ray 521. The light-emitting element 510 is mounted to a base end side of the toppling portion 200 and the light-receptive element 520 is provided to a tip end side of the toppling portion 200. In other words, the road control member 400 toppled over by the toppling portion 200 enters between the light-emitting element 520 and the light-receptive element 510 and reception of the infrared ray 521 by the light-receptive element 510 is hindered.

On the other hand, a signal 511 from the light-receptive element 510 is input to the control portion 600 and it is judged that the toppling portion 200 has toppled the road control member 400 over when the signal 511 from the light-receptive element 510 stops. Then, based on the judgement, a driving signal 610 is sent to the driving portion 130 to drive the driving portion 130. When the rotating arm 110 rotates a half turn and the retrieving lug 120 which has retrieved the road control member 400 reaches the retrieving position, the control portion 600 stops driving by the driving portion 130 and brings the other retrieving lug 120 to the standby position.

Therefore, if the toppling portion 200 topples the road control member 400 over, the retrieving lug 120 is fitted in the opening end 430 of the toppled-over road control member 400 to retrieve the road control member 400.

It is also possible to employ a vibration sensor or an impact sensor for sensing contact of the road control member 400 with the toppling portion 200 instead of the above-described detecting portion 500 in which the infrared ray 521 is used.

Next, a road control member retrieving apparatus according to the fourth embodiment of the invention will be described by reference to FIG. 6.

This road control member retrieving apparatus according to the fourth embodiment is different from the above-described three road control member retrieving apparatuses in the rotating arm 110.

The rotating arm 110 in the road control member retrieving apparatus according to the fourth embodiment is positioned above the rear body 310 of the truck 300 in an upper half turn. As a result, the retrieving lug 120 which has retrieved the road control member 400 is necessarily positioned above the rear body 310 and therefore, the operator can retrieve the road control member 400 without leaning out of the rear body 310. Here, the upper half turn means a range of 180° (a range shown by an arrow in FIG. 6(B)) which is the sum of opposite 90° of a locus 600 of the rotating arm 110 extending in opposite directions from top dead center 610 of the rotating arm 110 as a center as shown in FIG. 6(B).

In this case, because the road control member 400 is in a downward orientation in a range of 90° from top dead center 610 toward bottom dead center 620 of the retrieving lug 120, the road control member 400 comes off the retrieving lug 120 and drops on the rear body 310 by itself, which results in an advantage that the operator for retrieving the road control member 400 by his/her hand is unnecessary.

Although the transfer car to which the road control member retrieving apparatus can be mounted is the truck 300 in the apparatus according to the above-described embodiments, the invention is not limited to this. For example, the transfer car may be a vehicle having a caterpillar track or may be a vehicle moving on a rail track.

Although one retrieving lug 120 is provided to each end of the rotating arm 110 in the road control member retrieving apparatus according to the above-described embodiments, the retrieving lug 120 may be only provided to one end of the rotating arm as shown in FIG. 8(A) or it is also possible that the rotating arm 110 is formed into a three-pronged shape at intervals of 120° and that three retrieving lugs 120 are provided as shown in FIG. 8 (B) or the rotating arm 110 may be formed to have four or more prongs.

The road control member retrieving apparatus according to the present invention is the road control member retrieving apparatus for retrieving a hollow conical road control member disposed on a ground comprising a retrieving portion mounted to a transfer car and a toppling portion mounted forward of the retrieving portion in a traveling direction of the transfer car to topple the road control member over by traveling of the transfer car, wherein the retrieving portion includes a retrieving lug to be fitted in the road control member which has been toppled over by the toppling portion, a rotating arm to which the retrieving lug is mounted, and a driving portion for rotating the rotating arm, the rotating arm is rotated, the retrieving lug is fitted in the toppled-over road control member, and the road control member is moved to a retrieving position of the road control member on an upper side of the transfer car.

According to this road control member retrieving apparatus, it is possible to obtain the road control member retrieving apparatus which can ensure safety of the operator and which has a simpler structure.

If the toppling portion is mounted to a rear side of the transfer car and retrieval of the road control member is carried out while the transfer car travels backward, it is possible to lessen fears of drivers traveling in a traveling area. In other words, if retrieval of the road control member is carried out by forward traveling of the transfer car, an illusion that the transfer car retrieving the road control members is traveling in a reverse direction by mistake is given to drivers of normal vehicles traveling in the traveling area. However, if the road control members are retrieved by backward traveling, such an illusion is less liable to be given.

If the toppling portion is provided with a toppling guide portion for toppling the road control member in such a range that the retrieving lug is fitted in the road control member, even if the road control member is toppled over in a diagonal direction because of an error in visual measurement of a driver of the transfer car or in guidance of the operator on the rear body, the road control member can be toppled over with the toppling guide portion within such a range that the retrieving lug is fitted. As a result, reliable retrieval of the road control member is possible.

If the apparatus includes a detecting portion for detecting the road control member which has been toppled over by the toppling portion and a control portion for controlling the driving portion such that the retrieving lug is fitted in the toppled-over road control member according to a detection result of the detecting portion, operation of the retrieving portion by the operator becomes unnecessary. Therefore, it is possible that there is only the operator for retrieving the road control member in which the retrieving lug is fitted.

If the rotating arm is positioned above the transfer car when the rotating arm is in an upper half turn, the operator can retrieve the road control member without leaning out of the rear body. Because the retrieved road control member may drop on the rear body by itself in some cases, it is possible that the operator on the rear body is unnecessary.

Because the retrieving portion and the toppling portion are detachably mounted to the transfer car, the retrieving portion and the toppling portion can be freely mounted to both the right and left sides of the transfer car, which is convenient. When the road control member retrieving apparatus is not used, the apparatus may be housed in a warehouse or the like.

If the transfer car is a truck, the apparatus is suitable for construction on the road in which retrieval of the road control members is carried out most frequently.

### [Possibility of Industrial Application]

The present invention can be used as a road control member retrieving apparatus for retrieving hollow conical road control members arranged on a road in traffic control associated with road construction and the like.

## Claims

1. A road control member retrieving apparatus for retrieving a hollow conical road control member disposed on a ground comprising a retrieving portion mounted to a transfer car and a toppling portion mounted forward of said retrieving portion in a traveling direction of said transfer car to topple said road control member over by traveling of said transfer car, wherein said retrieving portion includes a retrieving lug to be fitted in said road control member which has been toppled over by said toppling portion, a rotating arm to which said retrieving lug is mounted, and a driving portion for rotating said rotating arm, said rotating arm is rotated, said retrieving lug is fitted in said toppled-over road control member, and said road control member is moved to a retrieving position of said road control member on an upper side of said transfer car.

2. The road control member retrieving apparatus according to claim 1, wherein said toppling portion is mounted to a rear side of said transfer car and retrieval of said road control member is carried out while said transfer car travels backward.

3. The road control member retrieving apparatus according to claim 1 or 2, wherein said toppling portion is provided with a toppling guide portion for toppling said road control member in such a range that said retrieving lug is fitted in said road control member.

4. The road control member retrieving apparatus according to claim 1, 2, or 3 further comprising a detecting portion for detecting said road control member which has been toppled over by said toppling portion and a control portion for controlling said driving portion such that said retrieving lug is fitted in said road control member according to a detection result of said detecting portion.

5. The road control member retrieving apparatus according to claim 1, 2, 3, or 4, wherein said rotating arm is positioned above said transfer car when said rotating arm is in an upper half turn.

6. The road control member retrieving apparatus according to claim 1, 2, 3, 4, or 5, wherein said retrieving portion and said toppling portion are detachably mounted to said transfer car.

7. The road control member retrieving apparatus according to claim 1, 2, 3, 4, 5, or 6, wherein said transfer car is a truck.
